# EUROPÄISCHE PATENTSCHRIFT

(11) **EP 1 250 783 B1**
(45) Veröffentlichungstag und Bekanntmachung des Hinweises auf die Patenterteilung: **20.12.2006**
(21) Anmeldenummer: 01907337.8
(22) Anmeldetag: 09.01.2001
(51) Int. Cl.: H04L 25/14

(54) **VERFAHREN UND VORRICHTUNG ZUM AUSGLEICH VON ÜBERTRAGUNGSLAUFZEITEN BEI DATENÜBERTRAGUNG ÜBER MEHRERE ÜBERTRAGUNGSKANÄLE**
METHOD AND DEVICE FOR EQUALISING TRANSMISSION RUNNING TIMES DURING THE TRANSMISSION OF DATA THROUGH SEVERAL TRANSMISSION CHANNELS
PROCEDE ET DISPOSITIF POUR COMPENSER DES DUREES DE TRANSMISSION LORS DE LA TRANSMISSION DE DONNEES PAR L'INTERMEDIAIRE DE PLUSIEURS CANAUX DE TRANSMISSION

(30) Priorität: 27.01.2000 DE 10003485
(43) Veröffentlichungstag der Anmeldung: 23.10.2002
(73) Patentinhaber: SIEMENS AKTIENGESELLSCHAFT, 80333 München (DE)
(72) Erfinder: WONKA, Rainer, 81379 München (DE)
(86) Internationale Anmeldenummer: PCT/DE2001/000053
(87) Internationale Veröffentlichungsnummer: WO 2001/056237

(56) Entgegenhaltungen:
- EP-A- 0 436 293
- EP-A- 0 529 169
- WO-A-90/12467

## Beschreibung

Die vorliegende Erfindung betrifft eine Vorrichtung zum Sortieren und Weiterleiten von Daten in einem Datenübertragungssystem, wie es im Oberbegriff des beigefügten Anspruches 1 beschrieben ist, und ein in dieser Vorrichtung angewendetes Verfahren zum Sortieren und Weiterleiten von Daten in einem Datenübertragungssystem, wie es im Oberbegriff des beigefügten Anspruchs 8 beschrieben ist.

In der Datenübertragungstechnik ist es bekannt, daß zur Erhöhung der Übertragungskapazität mehrere Übertragungskanäle gebündelt werden, d.h. die Datenübertragung von einem Sender zu einem Empfänger erfolgt parallel über mehrere Übertragungskanäle.

Ein Beispiel hierfür ist die Datenübertragung über mehrere Übertragungskanäle einer ISDN-Verbindung. Dabei erfolgt die Datenübertragung parallel über mehrere Übertragungskanäle (logische Kanäle), wobei jeder Übertragungskanal eine Übertragungskapazität von 56 kbit/s bzw. 64 kbit/s aufweist und die gesamte Übertragungskapazität somit ein Vielfaches von 56 kbit/s bzw. 64 kbit/s beträgt.

Bei dieser Art der Datenübertragung entsteht häufig das Problem, daß Laufzeitunterschiede der Daten entstehen. Das liegt zum Beispiel beim ISDN-System daran, daß die einzelnen Übertragungskanäle jeweils gesondert vermittelt werden, und die Daten somit über unterschiedliche physikalische Verbindungswege übertragen werden können.

Diese Laufzeitunterschiede werden beim Empfänger durch einen sogenannten Inversmultiplexer (INVMUX) kompensiert. Der Inversmultiplexer mißt die einzelnen Laufzeiten bzw. die Laufzeitunterschiede der Daten zueinander und gleicht sie aus. Für diese Aufgabe muß der Inversmultiplexer die empfangenen Daten einlesen, sortieren und weiterleiten.

Beim Stand der Technik werden die Aufgaben des Inversmultiplexers im wesentlichen durch einen Prozessor, der durch eine entsprechende Software gesteuert wird, ausgeführt. Das erfordert jedoch einen unvertretbar hohen Rechenaufwand und somit eine entsprechend hohe Prozessorleistung.

In der EP 0 529 169 werden die empfangenen Daten mit fortlaufenden Speicheradressen entsprechend der Reihenfolge, in der die Daten empfangen werden, gespeichert. Nach Ausgleich von Laufzeitunterschieden wird anschließend mit Hilfe von envelope signals und einem interleaver die ursprüngliche Reihenfolge wiederhergestellt.

In der WO 90/12467 werden die empfangenen Daten mit fortlaufenden Speicheradressen entsprechend der Reihenfolge, in der die Daten empfangen werden, gespeichert. Die Laufzeitunterschiede werden in speziellen Tabellen gespeichert. Mit Hilfe dieser Tabellen wird die ursprüngliche Reihenfolge durch gezieltes - d.h. selektives - Auslesen der Daten aus der fortlaufend adressierten Speichersequenz wiederhergestellt.

Eine Aufgabe der vorliegenden Erfindung liegt darin, das Sortieren und Weiterleiten von Daten zu verbessern.

Diese Aufgabe wird u.a. mit den durch die Ansprüche defunierten Gegenständen gelöst.

Gemäß der vorliegenden Erfindung werden von Daten, die aus verschiedenen logischen Übertragungskanälen empfangen werden, die Verzögerungen, mit der die Daten zueinander empfangen werden, ermittelt. Aufgrund dieser Verzögerungen, die am Anfang der Übertragung ermittelt werden, wird die Speicheradresse, unter die die jeweils aktuell empfangene Dateneinheit abgelegt wird, berechnet.

Dadurch, daß die empfangenen Daten entsprechend ihrer Verzögerung unter bestimmten Speicheradressen zwischengespeichert werden, wird die Weitersendung der Daten erheblich vereinfacht. Die Daten werden dabei in einer bestimmten Reihenfolge, zum Beispiel fortlaufend nach der Numerierung der Speicheradressen, aus der Speichervorrichtung ausgelesen und in dieser Reihenfolge versendet.

Der Vorteil der vorliegenden Erfindung besteht darin, daß der erfindungsgemäße Sortiervorgang im wesentlichen durch eine Hardware realisiert werden kann. Somit muß für die Kompensierung der Laufzeitunterschiede keine aufwendige Rechenleistung durch einen Prozessor zur Verfügung gestellt werden.

Vorteilhafte Ausgestaltungen der vorliegenden Erfindung sind in den Unteransprüchen 2 bis 7 und 9 bis 13 wiedergegeben.

Die empfangenen Daten sind jeweils auf bestimmten Positionen innerhalb eines Zeitrahmens angeordnet. Jede Position innerhalb dieses Zeitrahmens entspricht einem bestimmten Übertragungskanal. Da nicht von vornherein feststeht, welcher Übertragungskanal welche Position innerhalb des Zeitrahmens einnimmt, wird diese Position jedes Übertragungskanals mit Hilfe einer Startinformation, die zu Beginn jeder Übertragung über jeden Übertragungskanal versendet wird und die Nummer des Übertragungskanals enthält, durch die Verarbeitungsvorrichtung ermittelt. Während der Dauer einer Verbindung bzw. Übertragung verändern sich die Positionen der Übertragungskanäle innerhalb eines Zeitrahmens nicht mehr.

Der Zeitpunkt, zu dem die erste Startinformation empfangen wird, dient dabei als Referenz zur Berechnung der Verzögerung der Daten zueinander. Dabei spielt es keine Rolle, welche Startinformation aus welchem Übertragungskanal zuerst empfangen wird. Die erste Startinformation wird somit definitionsgemäß zur Zeit t = 0 empfangen. Weiterhin legt die Verarbeitungsvorrichtung diese erste empfangene Startinformation als Beginn bzw. erste Position der empfangenen Zeitrahmen fest.

Die Verzögerung, mit der die Daten zueinander empfangen werden, ergibt sich aus der Verzögerung, mit der die Startinformationen zueinander erkannt werden.

Die Verzögerungen der weiteren Startinformationen und somit die Verzögerungen der empfangenen Daten aus den weiteren Übertragungskanälen werden in Bezug auf die erste empfangene Startinformation ermittelt. Die jeweilige Verzögerung der weiteren empfangenen Startinformationen bzw. Daten ergibt sich aus der Zeit zwischen dem Empfangen der ersten Startinformation und dem Empfangen jeder weiteren Startinformation.

Die Speicheradresse, unter der die aktuell empfangene Dateneinheit zwischengespeichert wird, ergibt sich durch Subtraktion der jeweiligen Verzögerung von der Dauer seit Empfang der ersten Startinformation und Addition mit der Nummer des entsprechenden Übertragungskanals. Für die Verzögerung der Daten des ersten Übertragungskanals wird dabei Null eingesetzt, da dessen Startinformation die Referenz darstellt.

Die Verzögerungen werden mit Hilfe von Zählern ermittelt. Für jeden Übertragungskanal, aus dem Daten empfangen werden, ist dabei ein Zähler vorhanden, wobei jeder Zähler jeweils einem bestimmten Übertragungskanal zugeordnet ist.

Die einzelnen Zähler werden jeweils nach Empfangen der entsprechenden Startinformation gestartet. Nach Empfangen der letzten Startinformation - die Anzahl der Übertragungskanäle ist bekannt - werden alle Zähler gestoppt. Aus den einzelnen Zählerständen können dann die jeweiligen Verzögerungen ermittelt werden.

Die vorliegende Erfindung wird nachfolgend anhand eines bevorzugten Ausführungsbeispieles unter Bezug auf die beigefügten Zeichnungen näher erläutert, in denen zeigen
Figur 1 den schematischen Aufbau der erfindungsgemäßen Vorrichtung zum Sortieren und Weiterleiten von Daten,
Figur 2 ein Beispiel für empfangene Daten aus vier Übertragungskanälen,
Figur 3 ein Beispiel für die schaltungstechnische Realisierung der vorliegenden Erfindung,
Figur 4 ein Beispiel für die Berechnung der Speicheradressen, und
Figur 5 eine graphische Darstellung des zeitlichen Verlaufs der empfangenen Daten und deren Zwischenspeicherung.

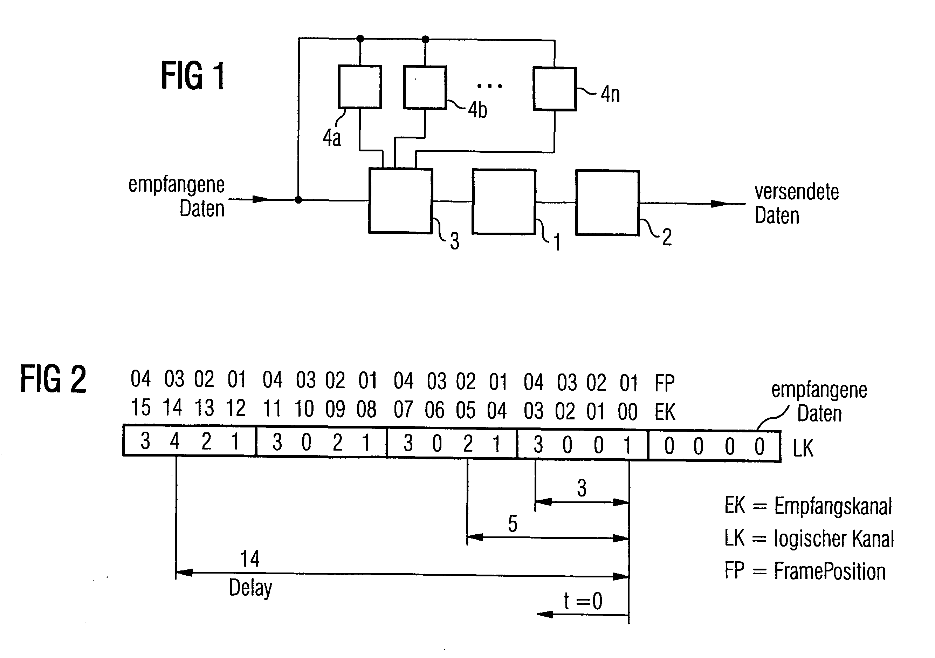

Anhand von Figur 1 wird nachfolgend der Aufbau der erfindungsgemäßen Vorrichtung zum Sortieren und Weiterleiten von Daten (nachfolgend Inversmultiplexer genannt) erläutert.

Zu Beginn der Verbindung bzw. der Datenübertragung werden die ankommenden Daten auf Startinformationen überprüft. Die Überprüfung findet mit Hilfe der Zähler 4a ... 4n statt. Jeder Zähler 4a ... 4n steht dabei für einen bestimmten Übertragungskanal, aus dem die Daten empfangen werden, zur Verfügung. Die einzelnen Zähler 4a ... 4n werden gestartet, nachdem die Startinformationen aus dem entsprechenden Übertragungskanal empfangen werden. Sobald die letzte Startinformation empfangen wird, werden alle Zähler 4a ... 4n gestoppt.

Die Verarbeitungsvorrichtung 3 ermittelt die Verzögerungen der Daten der einzelnen Übertragungskanäle, indem sie den Wert des jeweiligen Zählers von dem Wert des Zähler subtrahiert, der die erste Startinformation empfangen hat. Die Verzögerungen, mit der die Daten zueinander empfangen werden, werden für die Berechnung der Speicheradressen benötigt, unter denen die aktuell empfangenen Dateneinheiten zwischengespeichert werden.

Die Dateneinheiten werden nach Ermittlung der jeweiligen Speicheradresse unter der Speicheradresse in der Speichervorrichtung abgespeichert.

Die Sendevorrichtung 2 liest die Daten in einer bestimmten Reihenfolge, zum Beispiel fortlaufend nach Speicheradresse, aus und sendet die Daten weiter.

Anhand von Figur 2 wird nachfolgend beispielhaft erläutert, wie die Daten aus vier Übertragungskanälen empfangen werden.

Die Daten werden aus Zeitschlitzen mit einzelnen oder mehreren Dateneinheiten (zum Beispiel von 8 oder 16 Bit Größe) empfangen. Am Eingang des Inversmultiplexers liegt somit ein Datenstrom vor. Innerhalb dieses empfangenen Datenstroms werden die Daten aus mehreren, im gezeigten Beispiel sind es vier, Übertragungskanälen vertauscht und zueinander verzögert empfangen. Die Anzahl der Übertragungskanäle ist dem Inversmultiplexer bekannt. Aus der Anzahl der Übertragungskanäle ergibt sich die Rahmengröße des Zeitrahmens.

In Figur 2 ist ein Beispiel für einen Datenstrom von empfangenen Daten gezeigt. Die Ziffern innerhalb des Datenstroms bezeichnen dabei die Nummer des Übertragungskanals (logischer Kanal), in dem die Daten übertragen werden. Die Daten wurden in dem Beispiel in der Reihenfolge der Übertragungskanäle 1 - 2 - 3 - 4 versendet. Aus der Figur 2 ist zu sehen, daß die Daten zum einen vertauscht ankommen können (Reihenfolge 1 - 2 - 4 - 3 im Beispiel), und zum anderen zueinander verzögert (Daten aus dem Übertragungskanal 4 werden im gezeigten Beispiel 14 Dateneinheiten später empfangen, als die Daten aus dem Übertragungskanal 1).

Mit der ersten erkannten Startinformation wird eine interne Systemzeit des Inversmultiplexers gestartet. Diese erkannte Startinformation wird außerdem vom Inversmultiplexer als erste Dateneinheit des ersten Zeitrahmens (Frame) festgelegt. Der Übertragungskanal, der durch die erste empfangene Startinformation bezeichnet wird, belegt somit die erste Position (Frame Position) der empfangenen Zeitrahmen. Die weiteren Positionen der weiteren Übertragungskanäle innerhalb der empfangenen Zeitrahmen wird durch Auswerten der weiteren Startinformationen ermittelt. Die Startinformationen enthalten dabei jeweils die Nummer des Übertragungskanals (logischer Kanal). Die Länge des Zeitrahmens, d.h. die Anzahl der übertragenen logischen Kanäle, ist dem System bekannt.

Ein Test kann erfolgen, indem man die mit den Startinformationen empfangenen Adressen der Übertragungskanäle aufaddiert. Im Beispiel mit den Adressen 1, 2, 3, 4 muß das Ergebnis 10 sein. Da die Anzahl der Übertragungskanäle bekannt ist, kann man sie einfach vergleichen.

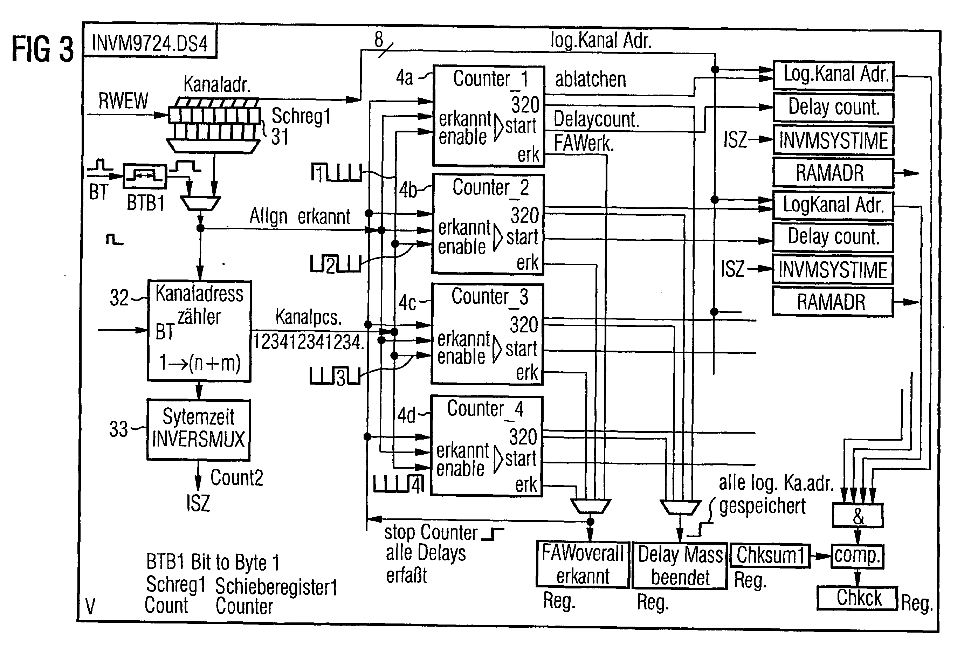

Figur 3 zeigt ein Beispiel für die schaltungstechnische Realisierung des Inversmultiplexers mit vier Übertragungskanälen.

Den Eingang der Schaltung bildet dabei ein Schieberegister 31. Von dem Schieberegister wird eine Dateneinheit (zum Beispiel 1 Byte im gezeigten Beispiel) abgegriffen und überprüft, ob es sich um eine Startinformation handelt. Der Überprüfungszeitpunkt wird durch den Bytetakt (BT) gesteuert. Der Bytetakt taktet auch einen Kanaladresszähler 32 und die interne Systemzeit des Inversmultiplexers (INVMUX Systemzeit, ISZ). Der Kanaladresszähler zählt die Kanalpositionen von 1 bis n durch, wobei n die Anzahl der Übertragungskanäle (im gezeigten Beispiel = vier).

Ist nun die erste Startinformation (zum Beispiel das Startbyte) erkannt, wird die Position im Zeitrahmen für diesen Übertragungskanal auf 1 gesetzt. Der Kanaladresszähler 32 aktiviert nun der Reihe nach die einzelnen Zähler (Counter) 4a ... 4d, die nach und nach durch die empfangenen Startinformationen der einzelnen Kanäle gestartet werden. Jeder aktivierte Zähler 4a ... 4d setzt dabei seinen Status auf erkannt = 1". Sind alle Startinformationen und somit die dazugehörigen übertragungskanäle erkannt, wird der Status "overall" erkannt und alle Zähler gestoppt. Aus den Zählerständen stehen nun die einzelnen Verzögerungen zur Verfügung. Die Verzögerungen werden dabei in vorteilhafter Weise als Dateneinheiten angegeben. Im gezeigten Beispiel bedeutet somit eine Verzögerung von 14 eine Verzögerung von 14 Bytes zur ersten empfangenen Startinformation.

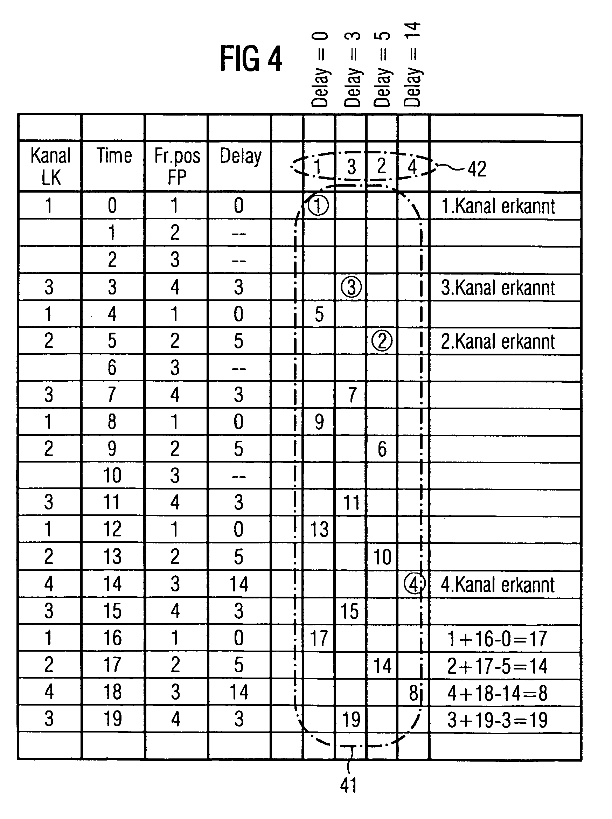

Anhand der Tabelle in Figur 4 wird nachfolgend die Berechnung der Speicheradressen 41 erläutert, unter denen die jeweiligen aktuell empfangenen Dateneinheiten der jeweiligen Übertragungskanäle 42 in der Speichervorrichtung 1 abgespeichert bzw. zwischengespeichert werden.

In der Spalte Kanal/LK sind die Übertragungskanäle in ihrer zeitlichen Reihenfolge, in der sie erkannt und in der aus ihnen Daten empfangen werden, eingetragen. Der Übertragungskanal, der die Startinformationen für die Kanalnummer 1 enthält, wurde im gezeigten Beispiel zuerst erkannt. Im gleichen Zeitrahmen wird der Übertragungskanal mit der Kanalnummer 3 erkannt.

Die INVMUX Systemzeit Time wird bei Erkennen der ersten Startinformation gestartet. Die Zeit entspricht der Anzahl der empfangenen Dateneinheiten (mit oder ohne Inhalt) seit Erkennen der ersten Startinformation. Mit Delay wird die Verzögerung als Anzahl der Dateneinheiten des jeweiligen Übertragungskanals seit Erkennen der ersten Startinformation (unabhängig vom Übertragungskanal) bezeichnet.

Die jeweilige Speicheradresse 41, unter der die aktuell empfangene Dateneinheit in der Speichervorrichtung abgespeichert wird, ist die logische Kanalnummer des jeweiligen Übertragungskanals addiert mit der Time minus der Delay.

Durch den beschriebenen Algorithmus wird erreicht, daß die erste empfangene Dateneinheit des ersten Übertragungskanals unter der ersten Speicheradresse abgelegt wird, die erste empfangene Dateneinheit des zweiten Übertragungskanals unter der zweiten Speicheradresse usw. Die gespeicherten Daten werden dann durch eine Sendevorrichtung 2 der Reihe nach, d.h. in der Reihenfolge 1, 2, 3 ... der Speicheradressen, aus der Speichervorrichtung 1 ausgelesen und versendet.

Die Speichervorrichtung ist dabei in vorteilhafter Weise als Ringspeicher mit einer bestimmten Kapazität ausgebildet, um die Kapazität der Speichervorrichtung begrenzen zu können. Dabei wird nach einer bestimmten Zeit, die abhängig von der Speicherkapazität ist, die Systemzeit INVMUX Systemzeit zurücksetzt und neu gestartet. Die Speicherkapazität richtet sich nach Größe der maximal zu erwartenden Verzögerung.

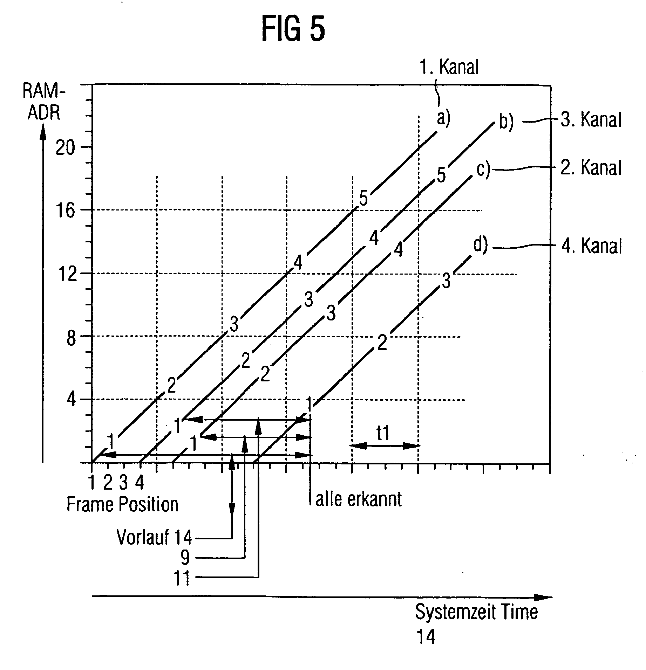

Figur 5 zeigt den zeitlichen Verlauf der empfangenen Daten und deren Zuordnung zu bestimmten Speicheradressen.

Die Daten der Übertragungskanäle werden dabei in der Reihenfolge a), b), c), d) empfangen. Durch die Abspeicherung in der Speichervorrichtung bleiben auch die Dateneinheiten erhalten, die empfangen werden, bevor die Messung der Verzögerung bzw. der Ausgleich der Verzögerung abgeschlossen ist.

| | | | | | |
|---|---|---|---|---|---|
| Im Empfänger ist somit | a) | b) | c) | d) | |
| der logische Kanal | 1 | 3 | 2 | 4 | |
| auf der Frame Position | 1 | 4 | 2 | 3 | |
| mit einem Delay in Frames von | 0 | 3 | 5 | 14 | |
| mit einem Vorlauf zum "letzten" von | 14 | 11 | 9 | 0 | Bytes. |

Dieser "Vorlauf" muß verzögert werden, da die Daten erst versendet bzw. weitergeleitet werden können, wenn die ersten Dateneinheiten des letzten Übertragungskanals empfangen wurden.

Im Zeitraum t1 wird somit in der Reihenfolge des Empfangs

| | | | | |
|---|---|---|---|---|
| das Byte | 5 | 4 | 2 | 5 |
| vom log Kanal | 1 | 2 | 4 | 3 |
| auf der Frameposition, | 1 | 2 | 3 | 4 |
| gespeichert unter der Speicheradresse | 17 | 14 | 8 | 19 |

Die vorliegende Erfindung kann dabei bei beliebig vielen Kanälen eingesetzt werden, vier Kanäle dienen nur als Beispiel.

Die vorliegende Erfindung findet zum Beispiel in einer sogenannten Datennetzeinheit Verwendung. Die Datennetzeinheit dient zur Datenübertragung entweder über eine Hochgeschwindigkeits-Festverbindung und/oder ein oder mehrere Verbindungen mit geringer Geschwindigkeit.

So können die Verbindungen mit geringer Geschwindigkeit entweder ersatzweise bei Ausfall der Festverbindung oder zur Kostenreduzierung verwendet werden oder zusätzlich, um die Übertragungsgeschwindigkeit zu erhöhen.

## Patentansprüche

1. Vorrichtung zum Sortieren und Weiterleiten von Daten in einem Datenübertragungssystem, in dem die Daten von einem Sender zu einem Empfänger über verschiedene Übertragungskanäle übertragen werden,
**dadurch gekennzeichnet, dass** sie folgende Mittel umfasst:
- Speichermittel (1) zum Zwischenspeichern von empfangenen Daten an vorbestimmten Speicheradressen;
- Sendemittel (2) zum Auslesen und Versenden der gespeicherten Daten in einer fortlaufend nach der Nummerierung der Speicheradressen bestimmten Reihenfolge;
- Verarbeitungsmittel (3) zum Ermitteln der Verzögerung, mit der die Daten relativ zueinander aus den Übertragungskanälen empfangen werden, und zum Vorbestimmen der Speicheradressen unter Berücksichtigung der ermittelten Verzögerungen derart, dass die ursprüngliche Reihenfolge der Daten entsteht, wenn die Daten fortlaufend nach der Nummerierung der Speicheradressen ausgelesen werden.

2. Vorrichtung nach dem vorstehenden Anspruch,
bei der das Verarbeitungsmittel so ausgebildet ist, dass mit Hilfe von Zählern die Verzögerung ermittelt wird, wobei für jeden Übertragungskanal, aus dem Daten empfangen werden, ein Zähler (4a...4n) vorhanden ist.

3. Vorrichtung nach einem der vorstehenden Ansprüche,
bei der die Daten auf bestimmten Positionen innerhalb eines Zeitrahmens angeordnet sind, wobei jede Position einem bestimmten Übertragungskanal entspricht, zu Beginn der Übertragung in jedem Übertragungskanal eine Startinformation über die Nummer des Übertragungskanales übertragen wird und die Position jedes Übertragungskanales innerhalb des Zeitrahmens mit Hilfe der Startinformation durch die Verarbeitungsmittel ermittelt wird.

4. Vorrichtung nach dem vorstehenden Anspruch,
bei der das Verarbeitungsmittel so ausgebildet ist, dass der Zeitpunkt beim Empfangen der ersten Startinformation als Referenz zur Berechnung der Verzögerung verwendet wird.

5. Vorrichtung nach dem vorstehenden Anspruch,
bei der das Verarbeitungsmittel so ausgebildet ist, dass die jeweilige Verzögerung der weiteren Startinformationen in Bezug auf die erste Startinformation ermittelt wird, wobei sich die Verzögerung jeder weiteren Startinformation aus der Zeit zwischen dem Empfangen der ersten Startinformation und dem Empfangen jeder weiteren Startinformation ergibt.

6. Vorrichtung nach einem der Ansprüche 3 bis 5,
bei der das Verarbeitungsmittel so ausgebildet ist, dass die Speicheradresse, unter der die aktuell empfangene Dateneinheit zwischengespeichert wird, berechnet wird, indem sie die jeweilige Verzögerung von der Dauer seit Empfangen der ersten Startinformation subtrahiert und mit der Nummer des Übertragungskanales addiert, wobei die Verzögerung der ersten Startinformation gleich Null ist.

7. Vorrichtung nach einem der Ansprüche 3 bis 6,
bei der das Verarbeitungsmittel so ausgebildet ist, dass die erste empfangene Startinformation als Beginn des ersten Zeitrahmens festlegt wird.

8. Verfahren zum Sortieren und Weiterleiten von Daten in einem Datenübertragungssystem, in dem die Daten von einem Sender zu einem Empfänger über verschiedene Übertragungskanäle übertragen werden,
**gekennzeichnet durch** folgende Schritte:
- Empfangen der Daten;
- Ermitteln der Verzögerung, mit der die Daten relativ zueinander aus den einzelnen Übertragungskanälen empfangen werden;
- Zwischenspeichern der empfangenen Daten unter Speicheradressen eines Speichermittels, die unter Verwendung der ermittelten Verzögerungen so berechnet werden, dass eine Ordnung der gespeicherten Daten fortlaufend nach der Numerierung der Speicheradressen die ursprüngliche Reihenfolge der Daten ergibt;
- Auslesen der Daten in einer fortlaufend nach der Numerierung der Speicheradressen bestimmten Reihenfolge;
- Versenden der Daten in dieser Reihenfolge.

9. Verfahren nach dem vorstehenden Verfahrensanspruch,
bei dem bei Daten, die auf bestimmten Positionen innerhalb eines Zeitrahmens angeordnet sind, wobei jede Position einem bestimmten logischen Übertragungskanal entspricht, zu Beginn der Übertragung in jedem Übertragungskanal eine Startinformation über die Nummer des Übertragungskanales übertragen wird und die Position jedes Übertragungskanales innerhalb des Zeitrahmens mit Hilfe der Startinformation ermittelt wird.

10. Verfahren nach dem vorstehenden Verfährensarispruch,
bei dem der Zeitpunkt beim Empfangen der ersten Startinformation als Referenz zur Berechnung der Verzögerung verwendet wird.

11. Verfahren nach dem vorstehenden Verfahrensanspruch,
bei dem die jeweiligen Verzögerungen der weiteren Startinformationen in Bezug auf die erste Startinformation ermittelt werden, wobei sich die Verzögerung jeder weiteren Startinformation aus der Zeit zwischen dem Empfangen der ersten Startinformation und dem Empfangen jeder weiteren Startinformation ergibt.

12. Verfahren nach einem der Ansprüche 9 bis 11,
bei dem die Speicheradresse, unter der die aktuell empfangene Dateneinheit zwischengespeichert wird, berechnet wird, indem die jeweilige Verzögerung von der Dauer seit Empfangen der ersten Startinformation subtrahiert und mit der Nummer des Übertragungskanales addiert wird, wobei die Verzögerung der ersten Startinformation gleich Null ist.

13. Verfahren nach einem der Ansprüche 9 bis 12,
bei dem die erste empfangene Startinformation als Beginn des ersten Zeitrahmens festgelegt wird.

## Claims

1. A device for sorting and forwarding data in a data transmission system, in which the data is transmitted from a transmitter to a receiver by way of different transmission channels,
**characterised in that** it comprises the following means:
- storage means (1) for buffering received data at predetermined storage addresses;
- transmitting means (2) for reading out and sending the stored data in a consecutive specific sequence after the numeration of the storage address;
- processing means (3) for determining the time delay, with which the data is received from the transmission channel relative to each other and for predetermining the storage addresses by considering the determined time delay such that the original sequence of data appears when the data is consecutively read out after the numeration of the storage address.

2. The device according to the preceding claim,
with which the processing means is configured such that the time delay is determined with the aid of counters, with a counter (4a...4n) existing for each transmission channel from which data is received.

3. The device according to one of the preceding claims,
with which the data is disposed on specific positions within a time frame, with each position corresponding to a specific transmission channel, a start information relating to the number of the transmission channel being transmitted at the beginning of the transmission in each transmission channel and the position of each transmission channel within the time frame being determined by the processing means with the aid of the start information.

4. The device according to the preceding claim
in which the processing means is configured such that the point in time at which the first start information is received is used as a reference to calculate the time delay.

5. The device according to the preceding claim,
in which the processing means is configured such that the respective time delay of the further start information is determined with regard to the first start information, with the time delay of each further start information resulting from the point in time between the receipt of the first start information and the receipt of each further start information.

6. The device according to one of claims 3 to 5,
in which the processing means is configured such that the storage address, by which the currently received data unit is buffered, is calculated, in which it subtracts the respective time delay from the duration since the receipt of the first start information and adds it to the number of the transmission channel, with the time delay of the first start information being equal to zero.

7. The device according to one of the claims 3 to 6,
in which the processing means is configured such that the first received start information is defined as the beginning of the first time frame.

8. A method for sorting and forwarding data in a data transmission system, in which the data is transmitted from one transmitter to a receiver by way of different transmission channels,
**characterised by** the following steps:
- receiving data
- determining the time delay with which the data is received from the individual transmission channels relative to one another,
- buffering the received data using storage addresses of a storage means, which is calculated by using the determined time delay such that an order of the stored data continuously results in the original sequence after the numeration of the storage addresses,
- reading out the data in a consecutive specific sequence after the numeration of the storage address
- sending the data in this sequence

9. The method according to the preceding method claim,
in which, with data, which is disposed on specific positions within a time frame, with each position corresponding to a specific logical transmission channel, a start information relating to the number of the transmission channel is transmitted at the beginning of the transmission in each transmission channel, and the position of each transmission channel within the time frame is determined with the aid of the start information.

10. The method according to the preceding method claim,
in which the point in time at which the first start information is received is used as a reference to calculate the time delay.

11. The method according to the preceding method claim,
in which the respective time delays of the further start information are determined with regards to the first start information, with the time delay of each further start information resulting from the point in time between the receipt of the first start information and the receipt of each further start information.

12. The method according to one of claims 9 to 11,
in which, the storage address, by which the currently received data unit is buffered, is calculated, in which the respective time delay is subtracted from the duration since the receipt of the first start information and is added to the number of the transmission channel, with the time delay of the first start information being equal to zero.

13. The method according to one of claims 9 to 12,
in which the first received start information is determined as the beginning of the first time frame.

## Revendications

1. Dispositif destiné à classer et acheminer des données dans un système de transmission de données, dans lequel les données sont transmises par un émetteur vers un récepteur par l'intermédiaire de différents canaux de transmission,
**caractérisé en ce qu'**il comprend les moyens suivants :
- moyen de mémoire (1) pour la mémorisation intermédiaire de données reçues à des adresses de mémoire prédéterminées ;
- moyen d'émission (2) pour lire et émettre les données mémorisées dans un ordre consécutif, déterminé par la numérotation des adresses de mémoire ;
- moyen de traitement (3) pour déterminer le retard avec lequel les données sont reçues relativement les unes par rapport aux autres à partir des canaux de transmission, et pour prédéterminer les adresses de mémoire en tenant compte des retards déterminés, de telle manière que l'ordre initial des données est crée lorsque les données sont lues de manière consécutive selon la numérotation des adresses de mémoire.

2. Dispositif selon la revendication précédente,
dans lequel le moyen de traitement est exécuté de telle manière que le retard est déterminé à l'aide de compteurs, un compteur (4a ... 4n) étant présent pour chaque canal de transmission à partir duquel des données sont reçues.

3. Dispositif selon l'une quelconque des revendications précédentes,
dans lequel les données sont disposées sur certaines positions dans une trame de temps, chaque position correspondant à un canal de transmission déterminé, dans lequel au début de la transmission une information de départ concernant le numéro du canal de transmission est transmise dans chaque canal de transmission et dans lequel la position de chaque canal de transmission est déterminée dans chaque trame de temps par le moyen de traitement, à l'aide de l'information de départ.

4. Dispositif selon la revendication précédente,
dans lequel le moyen de traitement est exécuté de telle manière que le moment de réception de la première information de départ est utilisé comme référence pour le calcul du retard.

5. Dispositif selon la revendication précédente,
dans lequel le moyen de traitement est exécuté de telle manière que le retard respectif des autres informations de départ est déterminé en référence à la première information de départ, le retard de chaque autre information de départ résultant du temps écoulé entre la réception de la première information de départ et la réception de chaque autre information de départ.

6. Dispositif selon l'une quelconque des revendications 3 à 5,
dans lequel le moyen de traitement est exécuté de telle manière que l'adresse de mémoire, sous laquelle l'unité de données momentanément reçue est mémorisée de manière intermédiaire, est calculée du fait qu'elle soustrait le retard respectif de la durée écoulée depuis la réception de la première information de départ et qu'elle l'additionne au numéro du canal de transmission, le retard de la première information de départ étant égal à zéro.

7. Dispositif selon l'une quelconque des revendications 3 à 6,
dans lequel le moyen de traitement est exécuté de telle manière que la première information de départ reçue est déterminée comme début de la première trame de temps.

8. Procédé destiné à classer et acheminer des données dans un système de transmission de données, dans lequel les données sont transmises par un émetteur vers un récepteur par l'intermédiaire de différents canaux de transmission,
**caractérisé par** les étapes suivantes :
- réception des données ;
- détermination du retard avec lequel les données sont reçues relativement les unes par rapport aux autres à partir de chacun des canaux de transmission ;
- mémorisation intermédiaire des données reçues sous des adresses de mémoire d'un moyen de mémoire, qui sont calculées en utilisant les retards déterminés, de telle manière qu'un ordre des données mémorisées, consécutif selon la numérotation des adresses de mémoire, donne l'ordre initial des données ;
- lecture des données dans un ordre déterminé de manière consécutive selon la numérotation des adresses de mémoire ;
- émission des données dans cet ordre.

9. Procédé selon la revendication précédente relative au procédé,
dans lequel pour les données qui sont disposées sur certaines positions dans une trame de temps, chaque position correspondant à un canal de transmission logique déterminé, une information de départ concernant le numéro du canal de transmission est transmise au début de la transmission dans chaque canal de transmission et dans lequel la position de chaque canal de transmission est déterminée dans la trame de temps à l'aide de l'information de départ.

10. Procédé selon la revendication précédente relative au procédé,
dans lequel le moment de réception de la première information de départ est utilisé comme référence pour le calcul du retard.

11. Procédé selon la revendication précédente relative au procédé,
dans lequel les retards respectifs des autres informations de départ sont déterminés en référence à la première information de départ, le retard de chaque autre information de départ résultant du temps écoulé entre la réception de la première information de départ et la réception de chaque autre information de départ.

12. Procédé selon l'une quelconque des revendications 9 à 11,
dans lequel l'adresse de mémoire, sous laquelle l'unité de données momentanément reçue est mémorisée de manière intermédiaire, est calculée du fait qu'elle soustrait le retard respectif de la durée écoulée depuis la réception de la première information de départ et qu'elle l'additionne au numéro du canal de transmission, le retard de la première information de départ étant égal à zéro.

13. Procédé selon l'une quelconque des revendications 9 à 12,
dans lequel la première information de départ reçue est déterminée comme début de la première trame de temps.
